(19) Europäisches Patentamt
European Patent Office
Office européen des brevets

(11) Veröffentlichungsnummer: **0 175 968**
**B1**

(12) **EUROPÄISCHE PATENTSCHRIFT**

(45) Veröffentlichungstag der Patentschrift: **05.12.90**

(51) Int. Cl.$^5$: **C 08 G 75/02,** B 29 C 47/76

(21) Anmeldenummer: **85111143.5**

(22) Anmeldetag: **04.09.85**

# (54) Verfahren zur Isolierung von Polyarylensulfiden.

(30) Priorität: **15.09.84 DE 3433978**

(43) Veröffentlichungstag der Anmeldung:
**02.04.86 Patentblatt 86/14**

(45) Bekanntmachung des Hinweises auf die Patenterteilung:
**05.12.90 Patentblatt 90/49**

(84) Benannte Vertragsstaaten:
**BE DE FR GB IT NL**

(56) Entgegenhaltungen:
**EP-A-0 102 536**
**FR-A-1 548 118**
**FR-A-2 360 397**
**US-A-3 887 529**
**US-A-3 956 060**

**Die Akte enthält technische Angaben, die nach dem Eingang der Anmeldung eingereicht wurden und die nicht in dieser Patentschrift enthalten sind.**

(73) Patentinhaber: **BAYER AG**
**D-5090 Leverkusen 1 Bayerwerk (DE)**

(72) Erfinder: **Alewelt, Wolfgang, Dr.**
**Bodelschwinghstrasse 32**
**D-4150 Krefeld (DE)**
Erfinder: **Eisermann, Wolfgang, Dr.**
**An den Kämpen 25**
**D-4000 Düsseldorf 31 (DE)**
Erfinder: **Meyer, Karl-Heinrich, Dr.**
**Deswatinesstrasse 89**
**D-4150 Krefeld (DE)**
Erfinder: **Tresper, Erhard, Dr.**
**Dahlerdyk 154**
**D-4150 Krefeld (DE)**
Erfinder: **Ullrich, Martin, Dipl.-Ing.**
**Mendelssohnstrasse 32**
**D-5090 Leverkusen (DE)**

**EP 0 175 968 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Gegenstand der Erfindung ist ein Verfahren zur Isolierung von Polyarylensulfiden mit verbesserten Produkt eigenschaften.

Polyarylensulfide und ihre Herstellung sind bekannt.

Das Molekulargewicht von Polyarylensulfiden kann durch thermische Behandlung besonders in Gegenwart von Luftsauerstoff erhöht werden. Die so behandelten Produkte sind verzweigt (s. beispielsweise US 4 370 471 und US 2 389 080). Sie haben gegenüber linearen Produkten schlechteres Fließverhalten und verringerte zähelastische Eigenschaften. Bei der thermisch oxidativen Behandlung ist mit partieller Über- bzw. Untervernetzung zu rechnen, so daß die Polymeren inhomogen werden und ihre Eigenschaften uneinheitlich.

Im allgemeinen wird zur Isolierung von Polyarylensulfiden das Produkt nach der Reaktion ausgefällt, und die Verunreinigungen, vor allem die anorganischen Salze, mit Wasser ausgewaschen. Anschließend wird das bis zu 500 Gew.-% (bezogen auf Polymer) Wasser und/oder andere Extraktionsmittel enthaltende Polyarylensulfid bei erhöhter Temperatur gegebenenfalls im Vakuum getrocknet. Dabei wird das Produkt über eine längere Zeit thermisch belastet und insbesondere bei nicht völligem Luftsauerstoffausschluß thermisch oxidativ verzweigt.

Es wurde jetzt gefunden, daß man Polyarylensulfide mit deutlich verbessertem Fließverhalten und verbesserten mechanischen Eigenschaften erhält, wenn man Polyarylensulfid, wie es bei den üblichen Herstellungsverfahren anfällt, durch Behandeln in Schneckenmaschinen gegebenenfalls unter gleichzeitigem oder nachfolgendem Aufschmelzen vom anhaftenden Wasser und gegebenenfalls anderen flüchtigen Bestandteilen in weniger als einer Stunde befreit. Man kann auf diese Weise Polyarylensulfide, die auch bereits verzweigt sein können, behandeln, welche hergestellt worden sind durch Umsetzung von

a) 50—100 Mol-% Dihalogenaromaten der Formel

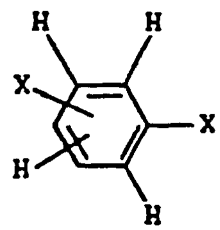

(I)

und 0—50 Mol-% Dihalogenaromaten der Formel

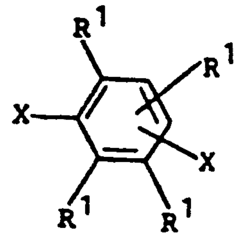

(II)

in denen

X für zueinander meta- oder para-ständiges Halogen, wie Chlor oder Brom steht, und

$R^1$ gleich oder verschieden ist und Wasserstoff, Alkyl, Cycloalkyl, Aryl, Alkylaryl, Arylalkyl sein kann, wobei zwei zueinander orthoständige Reste $R^1$ zu einem aromatischen oder heterocyclischen Ring verknüpft sein können und immer ein Rest $R^1$ verschieden von Wasserstoff ist und

b) 0 bis 5 Mol-%, bevorzugt 0,05 bis 2,5 Mol-%, bezogen auf die Summe der Dihalogenaromaten der Formel (I) und (II), eines Tri- oder Tetrahalogenaromaten der Formel

$$ArX_n \qquad (III),$$

wobei

Ar ein aromatischer oder heterocyclischer Rest ist,

X für Halogen wie Chlor oder Brom und

n für die Zahl 3 oder 4 steht, und

c) Alkalisulfiden, bevorzugt Natrium- oder Kaliumsulfid oder deren Mischung, bevorzugt in Form ihrer Hydrate oder wäßrigen Mischungen, gegebenenfalls zusammen mit Alkalihydroxiden wie Natrium- und Kaliumhydroxid, wobei das molare Verhältnis von (a+b):c im Bereich von 0,85:1 bis 1,15:1, vorzugsweise 0,95:1 bis 1,05:1, liegt in

d) organischen Lösungsmitteln, bevorzugt N-Alkyllactamen oder peralkylierten Harnstoffen, gegebenenfalls unter Mitverwendung von Katalysatoren und/oder Cosolventien, wobei das molare Verhältnis von Alkalisulfiden c) zu dem organischen Lösungsmittel d) im Bereich von 1:2 bis 1:15 liegt, und

e) Wasser in Form von Hydrat- oder freiem Wasser, wobei das molare Verhältnis von c:e im Bereich von 1:0 bis 1:3 liegt,

bei einer Reaktionstemperatur von 160°C bis 270°C, gegebenenfalls unter Überdruck. Die erhaltene Reaktionsmischung kann in ein Fällmittel eingetragen und aus dem ausgefallenen Polyarylensulfid die löslichen Verunreinigungen mit Wasser und/oder anderen Extraktionsmitteln ausgewaschen werden.

Dieses Verfahren ist bekannt. Es kann in vielfacher Weise abgewandelt werden, z.B. durch Mitverwendung von Katalysatoren.

Das erhaltene Produkt kann grob/feinpulvrig oder faser- oder plättchenförmig sein oder, wenn dies sich als vorteilhaft erweist, in eine entsprechende andere Form vor der Weiterverarbeitung gebracht werden. Auch ist es denkbar, den Wasser- und/oder Extraktionsmittelgehalt durch bekannte technische Verfahren hier geeignet einzustellen.

Die so erhaltenen Polyarylensulfide werden kontinuierlich in eine beheizte Schneckenmaschine eindosiert. Das Wasser und/oder andere Extraktionsmittel und andere vorhandene oder entstehende flüchtige Anteile werden in einem oder mehreren Ausdampfdömen, gegebenenfalls im Vakuum abgedampft, das Polyarylensulfid gegebenenfalls aufgeschmolzen, gegebenenfalls als Strang abgezogen und granuliert.

Gegenstand der Erfindung ist daher ein Verfahren zur Isolierung von Polyarylensulfiden, dadurch gekennzeichnet, daß man Polyarylensulfide, wie sie bei den üblichen Herstellungsverfahren anfallen, durch Behandeln in Schneckenmaschinen gegebenenfalls unter Aufschmelzen bei einer Temperatur von 250—350°C und gegebenenfalls bei einem Druck von 1—600 mbar von anhaftendem Wasser und gegebenenfalls anderen flüchtigen Bestandteilen in weniger als 5 Minuten befreit.

Der Wasser- und/oder Extraktionsmittelgehalt kann 5—400%, vorzugsweise 10—100%, bezogen auf Polyarylensulfid, betragen. Die Temperaturen im Extruder werden so eingestellt, daß das Wasser und/oder Extraktionsmittel verdampfen kann und das Polyarylensulfid aufgeschmolzen wird. Geeignete Temperaturen sind 250—350°C, vorzugsweise 270—320°C, für eine Aufschmelzung des Polyarylensulfids. Als Vakuum kommen Drücke von 1—600 mbar, vorzugsweise 1—300 mbar in Frage, wobei unterschiedliche Döme mit unterschiedlichen Vakua betrieben werden können.

Geeignete Schneckenmaschinen sind beispielsweise übliche Ein- oder Zweiwellenschnecken, wie sie für die Abdampfung von Lösungsmitteln bekannt sind (s. H. Herrmann, "Schneckenmaschinen in der Verfahrenstechnik", Springer Verlag 1972). Auch diskontinuierlich arbeitende Maschinen beispielsweise Kneter sind geeignet.

Ein wesentlicher Vorteil des erfindungsgemäßen Verfahrens sind die kurzen Zeiten, die zur Aufarbeitung und Trocknung benötigt werden. Brauchte man nach den bekannten Verfahren bis zu 30 Stunden allein für die Trocknung, so kann erfindungsgemäß diese Zeit stark verkürzt werden. Zur erfindungsgemäßen Trocknung werden Zeiten von weniger als 5 Minuten benötigt.

In die Polyarylensulfidschmelze können gegebenenfalls in einem Arbeitsgang die späteren Eigenschaften des Polyarylensulfids günstig beeinflussende Zusatzstoffe wie Stabilisatoren, Modifikatoren, Pigmente, Füll- und Verstärkungsstoffe, eingearbeitet werden.

Herstellung eines Polyphenylensulfids (gemäß DE—OS 3 339 233)

In einem mit Rührer und Destillationsaufsatz ausgerüstetem Autoklaven werden 1,290 g Natriumsulfid-trihydrat (=10,0 Mol $Na_2S$), 204,1 g Natriumacetat-trihydrat (15 Mol-%, bezogen auf $Na_2S$) und 4000 ml N-Methylpyrrolidon vorgelegt und auf 200°C erhitzt. Dabei destilliert eine Flüssigkeit ab, die im wesentlichen aus Wasser besteht.

Anschließend werden 1,470 g 1,4-Dichlorbenzol, gelöst in 500 ml N-Methylpyrrolidon, zugegeben und das Reaktionsgemisch auf 240°C aufgeheizt und 5 h bei dieser Temperatur belassen.

Nach beendeter Reaktion wird das Reaktionsgemisch unter kräftigem Rühren in Isopropanol eingetragen. Das faser- bis pulverförmig ausgefallene Produkt wird viermal mit der vierfachen Menge Fällungsmittel gewaschen und anschließend zur Entfernung von Restmengen anorganischer Salze mit Wasser elektrolytfrei gewaschen.

Beispiel 1 (Vergleich)

Ein nach dieser Vorschrift hergestelltes Polyphenylensulfid mit einem Wassergehalt von 100%, bezogen auf das Polyarylensulfid, wird in einem Tellertrockner unter Stickstoff bei verschiedenen Temperaturen und unterschiedlichen Verweilzeiten getrocknet. Die Ergebnisse sind in der Tabelle aufgeführt.

Beispiel 2

Polyphenylensulfid wie in Beispiel 1 wird in eine gleichsinnig rotierende Zweiwellenschnecke vom Typ ZSK 32 der Firma Werner und Pfleiderer mit zwei Heizzonen und zwei Ausdampfdömen mit einer Menge von 18 kg/Std. Feuchtprodukt eindosiert. Der erste Teil der Schnecke bis zum ersten Ausdampfdom wird mit 150°C beheizt und der zweite Teil einschließlich dem zweiten Ausdampfdom mit 280°C. Die mittlere Verweilzeit im Extruder beträgt 2 Min. Die abdestillierten Mengen verteilen sich auf den 1. und 2. Ausdampfdom wie 2:1. Das aufgeschmolzene Polyphenylensulfid wird mit 9 kg/Std. als Strang abgezogen und granuliert. Ergebnisse siehe Tabelle.

Beispiel 3

Beispiel 2 wird wiederholt, wobei im zweiten Ausdampfdom ein Vakuum von 100 mbar angelegt wird. Ergebnisse siehe Tabelle.

Nach Einarbeitung von 50% Glasfasern der Firma Silenka Typ 8041 in die erhaltenen Polyphenylensulfide, wurden Schlagzähigkeiten gemessen. Die Ergebnisse sind in der Tabelle aufgeführt.

TABELLE

| Beispiel | Trocknungsbedingungen Trockner/Temperatur | Trocknungszeit | Schmelzviskosität (Pas) gemessen bei 306°C in einem Rotationsviskosimeter | Schlagzähigkeit (kJ/m²) |
|---|---|---|---|---|
| 1 | Tellertrockner/80°C | 24 Std. | 100 | 29 |
| | Tellertrockner/140°C | 14 Std. | 140 | 25 |
| | Tellertrockner/200°C | 4 Std. | 240 | 16 |
| 2 | ZSK 32/Zone 1 150°C/Zone 2 280°C | 2 min | 90 | 32 |
| 3 | ZSK 32/Zone 1 150°C/Zone 2 280°C b. 100 mbar | 2 min | 95 | 34 |

**Patentanspruch**

Verfahren zur Isolierung von Polyarylensulfiden, dadurch gekennzeichnet, daß man Polyarylensulfide, wie sie bei den üblichen Herstellungsverfahren anfallen, durch Behandeln in Schneckenmaschinen unter Aufschmelzen bei einer Temperatur von 250—350°C und gegebenenfalls bei einem Druck von 1—600 mbar von anhaftendem Wasser und gegebenenfalls anderen flüchtigen Bestandteilen in weniger als 5 Minuten befreit.

**Revendication**

Procédé pour l'isolement de sulfures de polyarylènes, caractérisé en ce que l'on débarrasse en moins de 5 min les sulfures de polyarylènes, tels qu'ils se forment dans les procédés habituels de fabrication, de l'eau et éventuellement des autres constituants volatils y adhérant par traitement dans des machines à vis avec fusion totale à une température de 250—350°C et éventuellement sous une pression de 1—600 mbar.

**Claim**

A process for isolating polyarylene sulfides, characterized in that polyarylene sulfides of the type accumulating in the standard production processes are freed from adhering water and any other volatile constituents in less than 5 minutes by treatment in the melt in screw extruders at a temperature of 250 to 350°C and optionally under a pressure of 1 to 600 mbar.